# EUROPEAN PATENT APPLICATION

(11) **EP 1 496 390 A1**
(43) Date of publication of application: **12.01.2005**
(21) Application number: 04254070.8
(22) Date of filing: 07.07.2004
(51) Int. Cl.: G02F 1/141, G02F 1/1337

(54) **Alignment method of a ferroelectric liquid crystal and ferroelectric liquid crystal device using the same**

(30) Priority: 09.07.2003 KR 2003046323; 22.04.2004 KR 2004027772
(71) Applicant: Samsung Electronics Co., Ltd., Suwon-si, Gyeonggi-do (KR)
(72) Inventor: Kim, Chang-ju, Manan-gu Anyang-si Gyeonggi-do (KR); Wang, Jong-min, Bundang-gu Seongnam-si Gyeonggi-do (KR)
(74) Representative: Greene, Simon Kenneth

(57) **Abstract**

Provided is an alignment method of a liquid crystal of a ferroelectric liquid crystal (FLC) device. The direction of the director of a ferroelectric liquid crystal is controlled by applying an alternating current (AC) electric field to the ferroelectric liquid crystal tempered within a N*-to-SmC* phase transition temperature region. Since the direction of the director can be changed with temperature, the optical characteristics of a display panel can be optimized.

## Description

The present invention relates to a method of controlling an optical axis direction in a ferroelectric liquid crystal (FLC) device, and more particularly, to an alignment method of a liquid crystal of an FLC device using a continuous director rotation (CDR) FLC.

A continuous director rotation (CDR) ferroelectric liquid crystal (FLC) has a phase transition without a SmA* (Smectic A*) phase in contrast to a general FLC. In other words, as the temperature rises, the CDR FLC transits to a crystal-SmC* (Smetic C*)-N*(Chiral nematic)-Isotropic state. Since the CDR FLC has a bookshelf structure differently from the general FLC, it has high optical efficiency and does not show any zigzag pattern. Also, since the CDR FLC has a monostable structure instead of a bistable structure, it has an advantage of enabling an analog gray scale display.

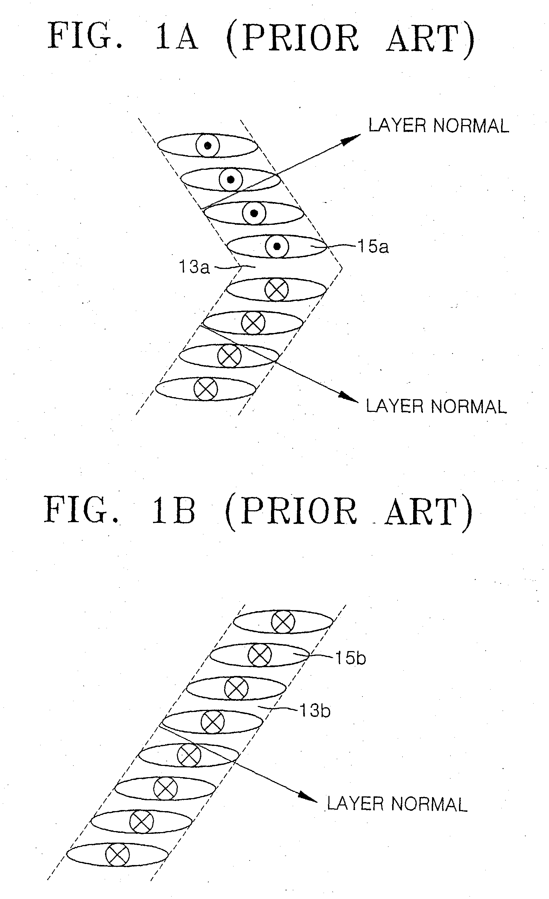

FIGS. 1A through 1C are views for describing an alignment method of an optical axis direction in the CDR FLC disclosed in the paper "Unidirectional Layer Alignment in Ferroelectric Liquid Crystal with N*-SmC* Phase Sequence" (by Katsunori Myojin, Hiroshi Moritake, Masanori Ozaki, Katsumi Yoshino, Takeshi Tani and Koichi Fujisawa; Jpn, J. Appl. Phys. Vol. 33(1994) pp 5491-5493 Part 1, No. 9B, September 1994).

Referring to FIG. 1A, when no electric field is applied to liquid crystal molecules, the liquid crystal molecules are aligned in two directions instead of a single direction. The layer normal forms a relative tilt angle with a rubbing direction at the right and left sides of the rubbing direction.

Referring to FIG. 1B, when a 10V direct current electric field is applied to the liquid crystal molecules during a phase transition from an N* phase to a SmC* phase, the liquid crystal molecules are aligned in the rubbing direction. However, the normal layer forms a predetermined tilt angle with the rubbing direction.

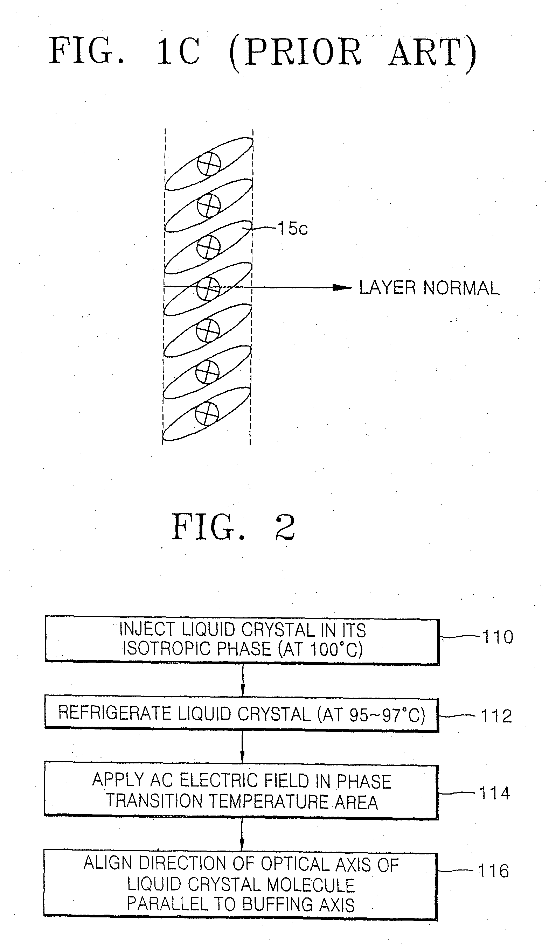

Referring to FIG. 1C, when a voltage having a triangular waveform is applied to liquid crystal molecules having no bias electric field at a temperature 1.5 ° C lower than a phase transition temperature, the liquid crystal molecules are aligned in a fixed direction, and the layer normal is parallel to the rubbing direction. However, an optical axis of the liquid crystal molecules forms a tilt angle with the rubbing direction.

According to a conventional alignment method of a liquid crystal device, an optical axis of a liquid crystal molecule coincides with a buffering axis (a rubbing direction) by applying the AC electric field and/or the DC electric field at an N*-SmC* phase temperature area. However, as the temperature of a liquid crystal decreases, the optical axis of the liquid crystal molecule becomes tilted with respect to the buffing axis. As a result, the optical axis does not coincide with the buffering axis. Due to such a difference between the angles of the optical axis and the buffering axis, when a polarized light is incident on the liquid crystal device at an actual driving temperature, a contrast ratio is degraded, resulting in degradation of display quality expressed on a screen.

In particular, most optical devices used in projection TVs use only a specific polarized light such as a p-wave or s-wave light and use a liquid crystal display (LCD) whose rubbing direction is towards an edge direction of a liquid crystal panel. In a case of an LCD using a nematic (N) mode, e.g., a liquid crystal on silicon (LcoS) panel, there is no difficulty in selecting an optical device because the buffing axis coincides with the optical axis of the liquid crystal molecule. However, when using the FLC, the optical axis of the liquid crystal molecule is titled at a predetermined angle with respect to the buffing axis. As a result, it is necessary to finely control the direction of the polarized light of the optical device to improve the contrast ratio. In practice, however, it is not easy to finely control polarized states of all of the optical devices used in projection TVs or LCDs. Accordingly, there is a need for a technique for coinciding the optical axis of the liquid crystal molecule with the buffing axis at a driving temperature.

According to an aspect of the present invention, there is provided an alignment method of a liquid crystal of a ferroelectric liquid crystal (FLC) device, where an optical axis direction of molecules of the liquid crystal is controlled by applying an alternating current (AC) electric field to the liquid crystal in an N*-to-SmC* phase transition temperature area when an FLC of the FLC device is aligned.

Preferably, the FLC is a continuous director rotation (CDR) FLC.

Preferably, the N*-to-SmC* phase transition temperature area is ±2°C of a phase transition temperature (Tc). Preferably, the phase transition temperature (Tc) is about 72°C.

Preferably, the AC electric field has a square wave, has a frequency ranging from 1Hz to 10Hz, and has a voltage ranging from 1V to 10V.

Preferably, the optical axis direction approaches a buffing axis within an angle of 2° with respect to the buffing axis in a driving temperature area.

Preferably, the optical axis direction coincides with edges of a panel in the driving temperature area. Preferably, the driving temperature area corresponds to 40°C.

Preferably, the FLC device comprises an upper substrate formed of indium tin oxide (ITO) and a lower substrate that includes an Al electrode and is formed of Si.

In the FLC, the optical axis of the liquid crystal molecule changes with temperature and it is not easy to coincide the optical axis of the liquid crystal molecule with the rubbing direction. The present invention suggests an alignment method of a liquid crystal of an FLC device, by which an optical axis direction of the liquid crystal molecule can be directed to a desired direction at a driving temperature area. In this way, the alignment method according to the present invention can improve reliability of a liquid crystal panel.

The present invention thus provides an alignment method of a liquid crystal of a ferroelectric liquid crystal (FLC) device, in which an optical axis of a liquid crystal molecule approaches a rubbing direction in a driving temperature.

The above and other aspects and advantages of the present invention will become more apparent by describing in detail an exemplary embodiment thereof with reference to the attached drawings in which:
FIGS. 1A through 1C are views for describing an alignment method of a continuous director rotation (CDR) ferroelectric liquid crystal (FLC), disclosed in the paper "Unidirectional Layer Alignment in Ferroelectric Liquid Crystal with N*-SmC* Phase Sequence" (by Katsunori Myojin, Hiroshi Moritake, Masanori Ozaki, Katsumi Yoshino, Takeshi Tani and Koichi Fujisawa; Jpn, J. Appl. Phys. Vol. 33(1994) pp 5491-5493 Part 1, No. 9B, September 1994);
FIG. 2 is a flowchart describing an alignment method of a liquid crystal of an FLC device according to an embodiment of the present invention;
FIG. 3 is a sectional view of the FLC device implementing the alignment method of the liquid crystal of the FLC device described in FIG. 2;
FIG. 4 is a plane view of the FLC device of FIG. 3;
FIG. 5 illustrates a screen and a panel when an optical axis coincides with a buffing axis by implementing the alignment method of the liquid crystal of the FLC device according to an embodiment of the present invention;
FIG. 6 is a graph showing a rate of change of a temperature with a tilt angle of an optical axis of a liquid crystal molecule for different voltage values; and
FIG. 7 is a graph showing a rate of change of a temperature with a tilt angle of an optical axis of a liquid crystal molecule for different frequency values.

### DETAILED DESCRIPTION OF THE INVENTION

The present invention will now be described more fully with reference to the accompanying drawings, in which preferred embodiments of the invention are shown. In the drawings, like reference numerals are used to refer to like elements throughout.

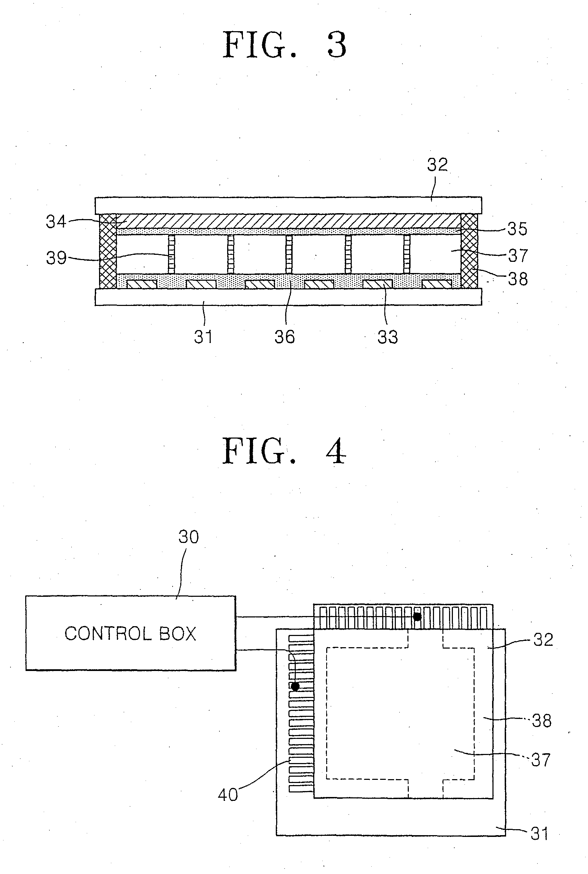

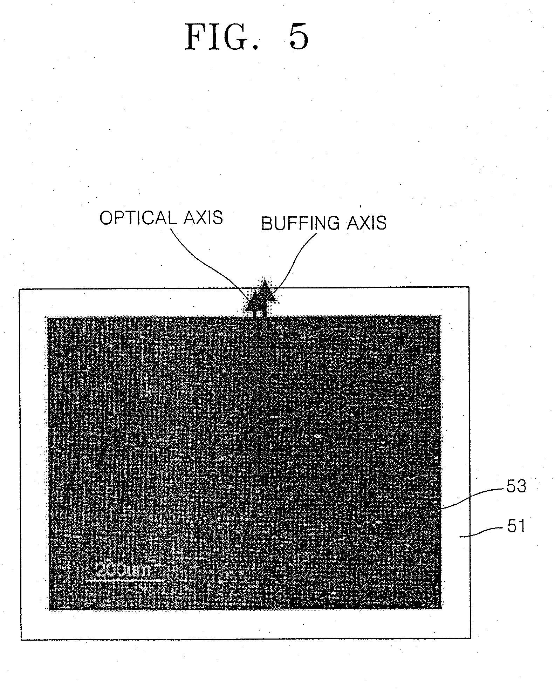

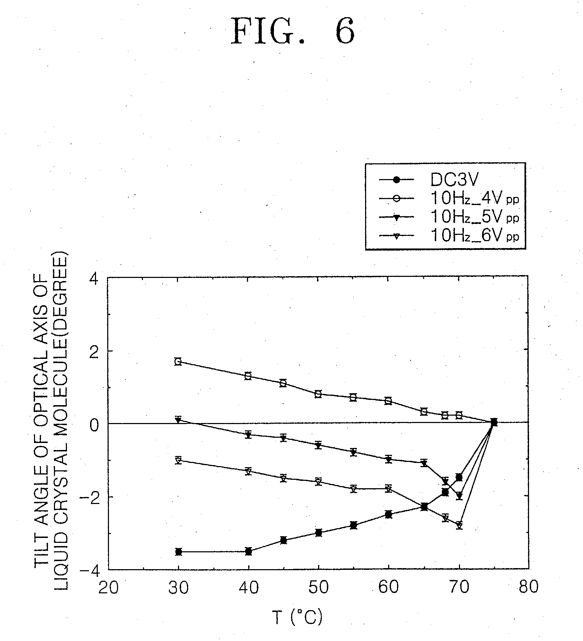

FIG. 2 is a flowchart describing an alignment method of a liquid crystal of an FLC device according to an embodiment of the present invention. FIG. 3 is a sectional view of the FLC device implementing the alignment method of the liquid crystal of the FLC device described in FIG. 2. FIG. 4 is a plane view of the FLC device of FIG. 3.

First, a liquid crystal display (LCD) manufacturing process will be briefly presented with reference to FIGS. 3 and 4. A lower alignment layer 36 is formed over a lower substrate 31, and an upper alignment layer 35 is formed under an upper substrate 32. Here, polyimide, polyvinyl, nylon, or polyvinyl alcohol (PVA) chemical materials are used as the upper alignment layer 35 and the lower alignment layer 36. After forming the lower alignment layer 36 and the upper alignment layer 35, a rubbing process of rubbing hardened polyimide with a rubbing velvet in a certain direction and forming a straight groove on the hardened polyimide is performed in order to align a liquid crystal in a fixed direction. After conducting the rubbing process, the upper substrate 32 and the lower substrate 31 are assembled. At this time, to secure a fixed cell gap between the lower substrate 31 and the upper substrate 32, a spacer 39 is formed at a predetermined location using photolithography or the like.

After forming the spacer 39, the upper substrate 32 and the lower substrate 31 are assembled using a sealant 38 and a liquid crystal 37 is injected into the cell gap. An alignment method of a liquid crystal of a FLC device according to the present invention proposes to incorporate a process of applying an alternating current (AC) electric field with a predetermined waveform, which has a given frequency and a given voltage at a given temperature according to a type of a liquid crystal, into the process of injecting of the liquid crystal 37. Thus, it is possible to finely direct the optical axis direction of molecules of the liquid crystal 37 to a desired direction.

Hereinafter, controlling the optical axis direction of the molecules of the liquid crystal 37 will be described in detail with reference to FIG. 2. After the upper substrate 32 and the lower substrate 31 are assembled, the inside of the cell gap is maintained vacuous below 1/1000Torr using a vacuum pump. Then, the temperature of a tray containing a liquid crystal is increased to about 110°C. When the assembled substrate cell is dipped in the tray containing the liquid crystal, and nitrogen (N₂) gas is then purged into a vacuum chamber slowly, the liquid crystal fills the remaining space in the cell as a result of the difference in pressure from inside and outside the cell (step 110). At this time, the liquid crystal is refrigerated and then transits to an N* phase at about 95 ∼ 97°C (step 112).

If the liquid crystal in the N* phase is continuously refrigerated, molecules of the liquid crystal transit to an SmC* phase in a phase transition temperature area. Assuming that a temperature at which the liquid crystal transits to the SmC* phase is Tc (≅72°C), the AC electric current is applied to the liquid crystal in the phase transition temperature area, preferably, ±2°C of Tc (Tc±2°C) (step 114). The direction of the optical axis of the molecules of the liquid crystal is aligned parallel to the buffing axis (step 116). Also, the direction of the molecules of the liquid crystal may be aligned in a desired direction, e.g., an edge direction of a panel.

Here, preferably, the AC electric field has a square waveform that has a voltage of 1 ∼ 10V and a frequency of 1 ∼ 10Hz. Referring to FIG. 4, the AC electric field is induced in a control box 30 installed at the outside the panel and is applied through a conducting wire to a pan pad 40 connected to a lower electrode 33 of the lower substrate 31 and an upper electrode 34 of the upper substrate 32. In this way, the AC electric field is input to every pixels of the panel. Preferably, a Si substrate is used as the lower substrate 31, an Al electrode is used as the lower electrode 33, and Indium Tin Oxide (ITO) is used as the upper electrode 32. Here, the lower substrate 31 & the lower electrode 33 and/or the upper substrate 32 & the upper electrode 34 can be patterned after desired shapes.

FIG. 5 illustrates a screen and a panel when the optical axis coincides with the buffing axis by implementing the alignment method of the liquid crystal of the FLC device according to an embodiment of the present invention. Referring to FIG. 5, each corresponding sides of a screen 51 and a panel 53 are parallel to each other. The optical axis of the liquid crystal molecule and the buffing axis indicating the rubbing direction are aligned parallel to each other. Thus, luminous efficiency of polarized lights emitted from the panel 53 increases, resulting in improvement of the display quality expressed on the screen 51.

FIG. 6 is a graph showing a rate of change of a temperature of a tilt angle of an optical axis of a liquid crystal molecule for different voltage values. The tilt angle of the optical axis denotes a difference between an optical axis of liquid crystal molecules in the N* phase (where the buffing axis and the optical axis are the same) and that of the liquid crystal molecules at each of different temperatures.

Referring to FIG. 6, when a voltage of DC3V is applied, the tilt angle of the optical axis continuously deviates from the buffing axis (0°) as the temperature decreases. At a driving temperature of 40°C, the tilt angle of the optical axis of the liquid crystal molecule with respect to the buffing axis deviates from -3.5°. However, when voltages of 4Vpp, 5Vpp, and 6Vpp are sequentially applied to the AC electric field having a frequency of 10Hz, the tilt angle of the optical axis of the liquid crystal molecule with respect to the buffing axis continuously decreases and approximates ±2° at the driving temperature of 40 with a 10 Hz frequency and a 5Vpp voltage.

When an electric field with a 4Vpp voltage is applied to a liquid crystal, a cusp does not occur in the tilt angle in contrast with when an electric field with a 5Vpp or 6Vpp voltage is applied. When the AC electric field with a 10 Hz frequency and a 4Vpp voltage is applied to the liquid crystal, the tilt angle increases little by little with a decrease in the temperature. When an external DC electric field is applied to the liquid crystal around an N*-SmC* phase temperature area, a liquid crystal layer is formed in the SmC* phase, and liquid crystal molecules are arranged at a tilt angle with respect to the buffing axis of the liquid crystal molecules. Even in the same SmC* phase, as the temperature decreases, the tilt angle gradually increases.

On the other hand, when an AC electric field with a 10 Hz frequency and a 5Vpp voltage or an AC electric field with a 10 Hz frequency and a 6Vpp voltage is applied to the liquid crystal, the tilt angle increases to -2° or greater around 70°C and then decreases with a decrease in the temperature, so a cusp appears. In other words, as the temperature decreases, the tilt angle of the optical axis of the liquid crystal molecules toward one side of the buffing axis increases. At the cusp, the tilt direction of the optical axis of the liquid crystal molecules is changed to the other side of the buffing axis. Accordingly, as the temperature decreases, the tilt angle of the optical axis of the liquid crystal molecules gradually decreases. Particularly in the phase transition temperature area, the tilt angle of the liquid crystal molecules with respect to the buffing axis gradually decreases, so the liquid crystal molecules are aligned when the AC electric field with the 5Vpp or 6Vpp voltage is applied better than when the AC electric field with the 4Vpp voltage is applied.

The present invention finely controls the optical axis using such decrease and increase in the tilt angle of the optical axis.

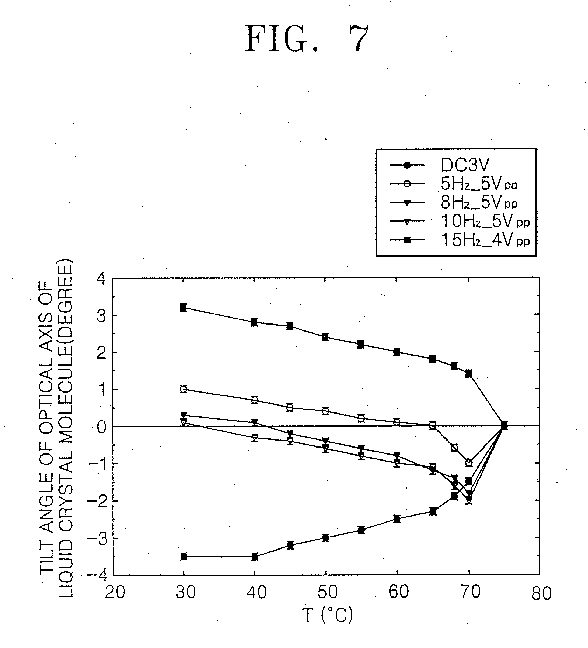

FIG. 7 is a graph showing a rate of change of a temperature of a tilt angle of an optical axis of a liquid crystal molecule for different frequency values. Referring to FIG. 7, when the voltage of DC3V is applied, the tilt angle of the optical axis of the liquid crystal molecule deviates from the buffing axis (0°) by -3.5° at the driving temperature of 40°C. When the AC electric field having a frequency of 15Hz and a voltage of 4Vpp is applied, the tilt angle of the optical axis of the liquid crystal molecule with respect to the buffing axis deviates from the buffing axis (0°) by 2.8° at the driving temperature of 40°C. However, an AC voltage is fixed to 5Vpp and frequencies of 5Hz, 8Hz, and 10Hz are sequentially applied, the tilt angle of the optical axis of the liquid crystal molecule with respect to the buffing axis reaches a cusp point at the temperature of 70°C, but gradually decreases and then approximates ±1 ° at the driving temperature of 40°C.

Therefore, in the alignment method of the liquid crystal of the FLC device, the direction of the liquid crystal is controlled to approach the buffing axis by applying the AC electric field with the square wave having the voltage of 1 ∼ 10V and the frequency of 1 ∼ 10Hz to the liquid crystal in a temperature area where the liquid crystal transits from the N* phase to the SmC* phase, thereby improving the contrast ratio in the projection TVs using polarized lights.

While the present invention has been particularly shown and described with reference to an exemplary embodiment thereof, it will be understood by those of ordinary skill in the art that various changes in form and details may be made therein without departing from the scope of the invention as defined by the appended claims.

## Claims

1. A method of aligning a liquid crystal of a ferroelectric liquid crystal device, the method comprising controlling an optical axis direction of molecules of the liquid crystal by applying an alternating current electric field to the liquid crystal in an N*-to-SmC* phase transition temperature region when a ferroelectric liquid crystal of the ferroelectric liquid crystal device is aligned.

2. The method of claim 1, wherein the ferroelectric liquid crystal is a continuous director rotation ferroelectric liquid crystal.

3. The method of claim 1 or 2, wherein the N*-to-SmC* phase transition temperature region is ±2°C of a phase transition temperature Tc.

4. The method of claim 3, wherein the phase transition temperature Tc is about 72°C.

5. The method of any preceding claim, wherein the alternating current electric field has a square wave.

6. The method of any preceding claim, wherein the alternating current electric field has a frequency ranging from 1 Hz to 10Hz.

7. The method of any preceding claim, wherein the alternating current electric field has a voltage ranging from 1 V to 10V.

8. The method of any preceding claim, wherein the optical axis direction approaches a buffing axis within an angle of 2° with respect to the buffing axis in a driving temperature region.

9. The method of claim 8, wherein the optical axis direction coincides with edges of a panel in the driving temperature region.

10. The method of claim 8 or 9, wherein the driving temperature region corresponds to 40°C

11. The method of any preceding claim, wherein the ferroelectric liquid crystal device comprises an upper substrate formed of indium tin oxide.

12. The method of any preceding claim, wherein the ferroelectric liquid crystal device comprises a lower substrate that includes an Al electrode and is formed of Si.
